(19) Europäisches Patentamt
European Patent Office
Office européen des brevets

(11) **EP 3 455 428 B1**

(12) **EUROPEAN PATENT SPECIFICATION**

(45) Date of publication and mention
of the grant of the patent:
**18.12.2024 Bulletin 2024/51**

(21) Application number: **17814078.6**

(22) Date of filing: **15.06.2017**

(51) International Patent Classification (IPC):
*E04B 1/86* (2006.01)          *E04C 2/26* (2006.01)
*E04B 1/74* (2006.01)          *B29B 17/00* (2006.01)

(52) Cooperative Patent Classification (CPC):
**B29D 7/00; E04B 9/04; E04C 2/16;** B29B 9/06;
B29K 2105/12; B29K 2105/26; B29K 2995/0001;
B29L 2007/002; B29L 2031/10; E04B 2001/746;
Y02W 30/91

(86) International application number:
**PCT/US2017/037648**

(87) International publication number:
**WO 2017/218756 (21.12.2017 Gazette 2017/51)**

(54) **PELLETIZATION OF RECYCLED CEILING MATERIALS**

PELLETIERUNG VON RECYCLING-DECKENMATERIALIEN

PELLETISATION DE MATÉRIAUX DE PLAFOND RECYCLÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2016 US 201662351523 P**

(43) Date of publication of application:
**20.03.2019 Bulletin 2019/12**

(73) Proprietor: **Armstrong World Industries, Inc.**
**Lancaster, PA 17604-3001 (US)**

(72) Inventors:
• **KRICK, Charles G.**
**Lititz, Pennsylvania 17543 (US)**
• **HULTGREN, Tawnya R.**
**Elizabethtown, Pennsylvania 17022 (US)**

(74) Representative: **Studio Torta S.p.A.**
**Via Viotti, 9**
**10121 Torino (IT)**

(56) References cited:
JP-A- 2001 317 134          JP-A- H07 104 763
KR-A- 20080 087 984          KR-A- 20090 055 270
KR-A- 20100 030 277          PL-B1- 206 725
US-A1- 2012 070 609

**Description**

**BACKGROUND**

Building panels comprising recycled materials have become increasingly popular due to cost and environmental concerns. However, when using recycled materials, it is increasingly difficult to improve the performance properties of building panels (e.g., acoustical performance, structural rigidity, etc.) based on the limitations associated with using recycled materials. Currently, achieving the desired performance properties of a building panel requires that either less recycled material be used in the building panel or that additional amounts of other, more expensive, material be included to offset the degradation in performance due to the inclusion of the recycled material.

Thus, there exists a need for a building panel that can exhibit the desired performance properties without decreasing the fraction of material derived from recycled material.

PL 206525 B1 discloses a method of producing sound-absorbing boards for noise reduction screens by compressing granulate of rubber waste or fiber waste mixed with a binder. The granulate of rubber waste or fiber waste, or any mixture thereof, is used in an amount of 50 to 90% by weight, is mixed with a binder, which is a degradation product of polyurethane foams or an agglomerate from polyolefin film waste, used in an amount of 10 to 50% by weight, mixed to obtain a homogeneous mixture. Optionally a crosslinking agent is introduced, after which the obtained mixture is pressed in a mold at a temperature from 150 ° C to 200 ° C, at 25-30 MPa pressure.

**BRIEF SUMMARY**

The present invention is directed to a method of producing an acoustical building panel comprising: forming a mixture comprising recycled material and water; feeding the mixture to an extruder at an entry point, whereby the mixture is processed into uniform web that exits the extruder at an exit point; forming pellets from the uniform web after the exit point, the pellets being in a second-state; and forming an acoustical building panel from the pellets, wherein the recycled material in the first-state is a cellulosic dust having a first average particle size and the pellets in the second-state have a second average particle size, the ratio of the second average particle size to the first average particle size is at least about 20:1.

Other embodiments of the present invention include an acoustical building panel comprising the features of claim 8.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention defined by the claims.

**BRIEF DESCRIPTION OF THE DRAWINGS**

The present invention will become more fully understood from the detailed description and the accompanying drawings, wherein:

Figure 1 is top perspective view of a building panel according to the present invention;
Figure 2 is a cross-sectional view of the building panel according to the present invention, the cross-sectional view being along the II line set forth in Figure 1;
Figure 3 is a ceiling system comprising the building panel of the present invention.

**DETAILED DESCRIPTION**

The following description of the preferred embodiment(s) is merely exemplary in nature and is in no way intended to limit the invention, its application, or uses.

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

Unless otherwise specified, all percentages and amounts expressed herein and elsewhere in the specification should be understood to refer to percentages by weight. The amounts given are based on the active weight of the material.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top," and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such.

Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

Unless otherwise specified, all percentages and amounts expressed herein and elsewhere in the specification should be understood to refer to percentages by weight. The amounts given are based on the active weight of the material. According to the present application, the term "about" means +/- 5% of the reference value. According to the present application, the term "substantially free" less than about 0.1 wt. % based on the total of the referenced value.

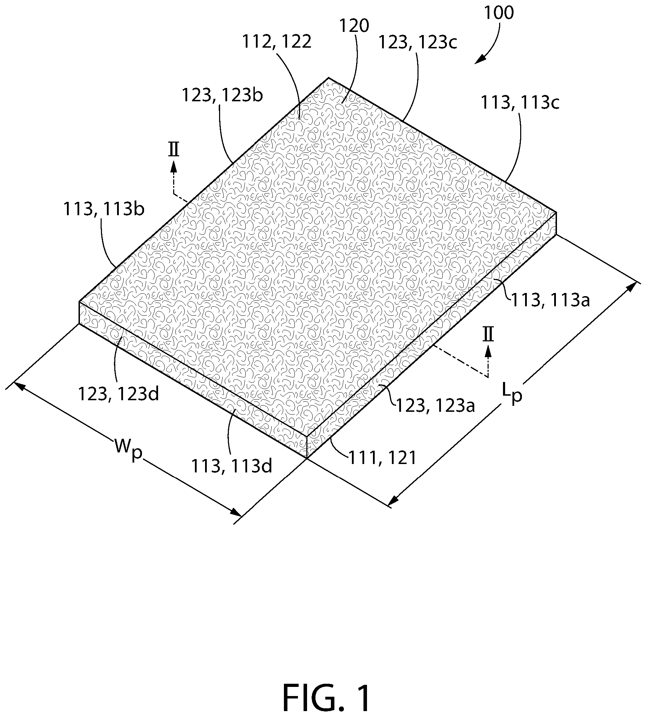

Referring to Figure 1, the building panel 100 of the present invention may comprise a first major surface 111 opposite a second major surface 112. The ceiling panel 100 may further comprise a side surface 113 that extends between the first major surface 111 and the second major surface 112, thereby defining a perimeter of the ceiling panel 100.

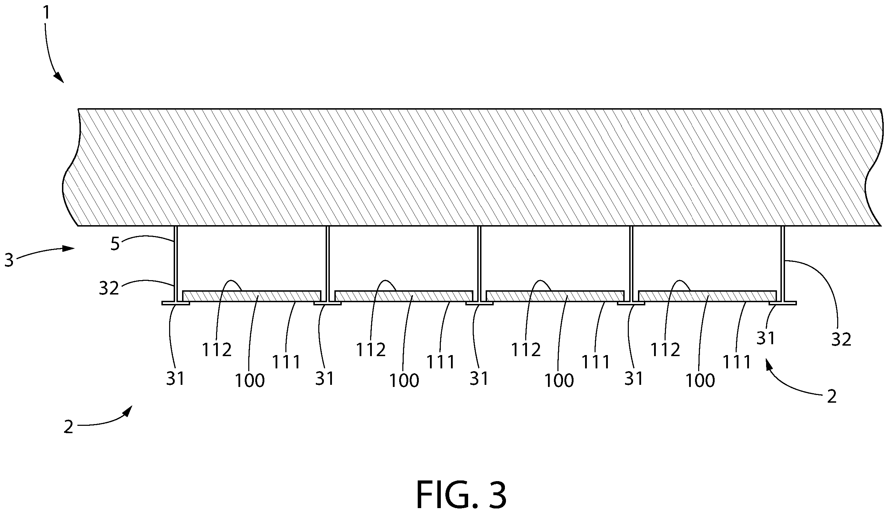

Referring to Figure 3, the present invention may further include a ceiling system 1 comprising one or more of the building panels 100 installed in an interior space, whereby the interior space comprises a plenary space 3 and an active room environment 2. The plenary space 3 provides space for mechanical lines within a building (e.g., HVAC, plumbing, etc.). The active space 2 provides room for the building occupants during normal intended use of the building (e.g., in an office building, the active space would be occupied by offices containing computers, lamps, etc.).

In the installed state, the building panels 100 may be supported in the interior space by one or more parallel support struts 5. Each of the support struts 5 may comprise an inverted T-bar having a horizontal flange 31 and a vertical web 32. The ceiling system 1 may further comprise a plurality of first struts that are substantially parallel to each other and a plurality of second struts that are substantially perpendicular to the first struts (not pictured). In some embodiments, the plurality of second struts intersects the plurality of first struts to create an intersecting ceiling support grid. The plenary space 3 exists above the ceiling support grid and the active room environment 2 exists below the ceiling support grid. In the installed state, the first major surface 111 of the building panel 100 faces the active room environment 2 and the second major surface 112 of the building panel 100 faces the plenary space 3.

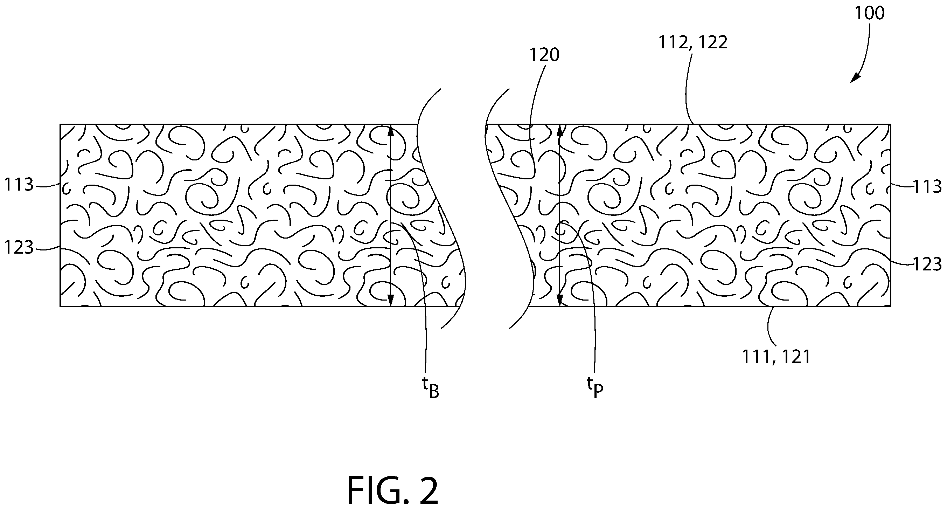

Referring now to Figures 1 and 2, the building panel 100 of the present invention may have a panel thickness $t_P$ as measured from the first major surface 111 to the second major surface 112. The panel thickness $t_P$ may range from about 12 mm to about 40 mm - including all values and sub-ranges there-between.

The side surface 113 of the building panel 100 may comprise a first side surface 113a, a second side surface 113b, a third side surface 113c, and a fourth side surface 113d. The first side surface 113a may be opposite the second side surface 113b. The third side surface 113c may be opposite the fourth side surface 113d. The first and second side surfaces 113a, 113b may be substantially parallel to each other. The third and fourth side surfaces 113c, 113d may be substantially parallel to each other. The first and second side surfaces 113a, 113b may each intersect the third and fourth side surfaces 113c, 113d to form the perimeter of the ceiling panel 100.

The building panel 100 may have a panel length $L_P$ as measured between the third and fourth side surfaces 113c, 113d (along at least one of the first and second side surfaces 113a, 113b). The panel length $L_P$ may range from about 30 cm to about 95 cm - including all values and sub-ranges there-between. The building panel 100 may have a panel width $W_P$ as between the first and second side surfaces 113a, 113b (and along at least one of the third and fourth side surfaces 113c, 113d). The panel width $W_P$ may range from about 30 cm to about 95 cm - including all values and sub-ranges there-between. The panel length $L_P$ may be the same or different than the panel width $W_P$.

The building panel 100 may comprise a body 120 having an upper surface 122 opposite a lower surface 121 and a body side surface 123 that extends between the upper surface 122 and the lower surface 121, thereby defining a perimeter of the body 120. The body 120 may have a body thickness $t_B$ that extends from the upper surface 122 to the lower surface 121. The body thickness $t_B$ may substantially equal to the panel thickness $t_P$.

The first major surface 111 of the building panel 100 may comprise the lower surface 121 of the body 120. The second major surface 112 of the building panel 100 may comprise the upper surface 122 of the body 120. When the first major surface 111 of the building panel 100 comprises the lower surface 121 of the body 120 and the second major surface 112 of the building panel 100 comprises the upper surface 122 of the body 120, the panel thickness $t_P$ is substantially equal to the body thickness $t_B$.

The body side surface 123 may comprise a first body side surface 123a, a second body side surface 123b, a third body side surface 123c, and a fourth body side surface 123d. The first body side surface 123a may be opposite the second body side surface 123b. The third body side surface 123c may be opposite the fourth body side surface 123d. The first side surface 113a of the building panel 100 may comprise the first body side surface 123a of the body 120. The second side surface 113b of the building panel 100 may comprise the second body side surface 123b of the body 120. The third side surface 113c of the building panel 100 may comprise the third body side surface 123c of the body 120. The fourth side surface 113d of the building panel 100 may comprise the fourth body side surface 123d of the body 120.

The first and second body side surfaces 123a, 123b may each intersect the third and fourth body side surfaces 123c, 123d to form the perimeter of the body 120. The body 120 may have a width that is substantially equal to the panel width $W_P$ - as measured between the first and second body side surfaces 123a, 123b. The body 120 may have a length that is substantially equal to the panel length $L_P$ - as measured between the third and fourth body side surfaces 123c, 123d.

The body 120 may be porous, thereby allowing airflow through the body 120 between the upper surface 122 and the lower surface 121 - as discussed further herein. The body 120 may be formed from a blend of a first component and a second component - as discuss further herein.

The first component of the present invention may comprise a fibrous material (also referred to as "fibers") and a binder. In some embodiments, the first component may further comprise a filler. The fibrous material may be formed from virgin stock material - i.e., non-recycled material.

The fibrous material may comprise organic fibers, inorganic fibers, or a blend thereof. Non-limiting examples of inorganic fibers mineral wool (also referred to as slag wool), rock wool, stone wool, and glass fibers. Non-limiting examples of organic fiber include cellulosic fibers (e.g. paper fiber - such as newspaper, hemp fiber, jute fiber, flax fiber, wood fiber, or other natural fibers), polymer fibers (including polyester, polyethylene, aramid - i.e., aromatic polyamide, and/or polypropylene), protein fibers (e.g., sheep wool), and combinations thereof. Depending on the specific type of material, the fibrous material may either be hydrophilic (e.g., cellulosic fibers) or hydrophobic (e.g. fiberglass, mineral wool, rock wool, stone wool).

The fibrous material may have an average length ranging from about 0.5 mm to about 2.0 mm - including all lengths and sub-ranges there-between. The fibrous material may be present in an amount ranging from about 40 wt. % to about 80 wt. % based on the total dry-weight of the first component - including all values and sub-ranges there-between. In a preferred embodiment, the fibrous material may be present in an amount ranging from about 50 wt. % to about 75 wt. % based on the total dry-weight of the first component - including all values and sub-ranges there-between.

The phrase "dry-weight" refers to the weight of a referenced component without the weight of any carrier. Thus, when calculating the weight percentages of components in the dry-state, the calculation should be based solely on the solid components (e.g., binder, filler, fibers, etc.) and should exclude any amount of residual carrier (e.g., water, VOC solvent) that may still be present from a wet-state, which will be discussed further herein. According to the present invention, the phrase "dry-state" may also be used to indicate a component that is substantially free of a carrier, as compared to the term "wet-state," which refers to that component still containing various amounts of carrier - as discussed further herein.

Non-limiting examples of binder may include a starch-based polymer, polyvinyl alcohol (PVOH), a latex, polysaccharide polymers, cellulosic polymers, protein solution polymers, an acrylic polymer, polymaleic anhydride, epoxy resins, or a combination of two or more thereof. The binder may be present in an amount ranging from about 3 wt. % to about 20 wt. % based on the total dry-weight of the first component - including all values and sub-ranges there-between. In a preferred embodiment, the binder may be present in an amount ranging from about 5 wt. % to about 15 wt. % based on the total dry-weight of the first component - including all values and sub-ranges there-between.

Non-limiting examples of the filler may include powders of calcium carbonate, including limestone, titanium dioxide, sand, barium sulfate, clay, mica, dolomite, silica, talc, perlite, polymers, gypsum, wollastonite, expanded-perlite, calcite, aluminum trihydrate, pigments, zinc oxide, or zinc sulfate. Building panels that are suitable as acoustic ceiling panels require certain porosity, which results in good sound absorption. Adding mineral materials as filler, such as high density expanded perlite, may enhance sound absorbing properties and to provide strength to the otherwise lightweight tiles and panels.

The filler may be present in an amount ranging from about 5 wt. % to about 30 wt. % based on the total dry-weight of the first component - including all values and sub-ranges there-between. In a preferred embodiment, the filler may be present in an amount ranging from about 10 wt. % to about 20 wt. % based on the total dry-weight of the first component - including all values and sub-ranges there-between.

The filler may have a particle size ranging from about 1 $\mu$m to about 15 $\mu$m - including all values and sub-ranges there-between. In a preferred embodiment, the powders may have a particle size ranging from about 3 $\mu$m to about 7 $\mu$m - including all values and sub-ranges there-between.

The first component may further comprise one or more additives. Non-limiting examples of additive include defoamers, wetting agents, hydrophobizing agents, biocides, dispersing agents, flame retardants, and the like. The additive may be present in an amount ranging from about 0.1 wt. % to about 1.0 wt. % based on the total dry-weight of the first component - including all values and sub-ranges there-between.

The second component comprises recycled material that is in a second-state. The second-state includes the recycled material being solid macro-sized pellets of the recycled material - referred to herein as "pellets." The pellets may be discrete particles that are formed entirely from the recycled material - i.e. the recycled material is present in an amount of at least 95 wt. % based on the total dry-weight of the second component. The pellets may be discrete particles that comprise minor amounts of filler and/or binder - i.e. a non-zero amount up to about 5 wt. % based on the total dry-weight of the second component. The filler and binder present in the second component may be virgin material - i.e., non-recycled material.

The recycled material may be organic material, inorganic material, or a combination of both. Non-limiting examples of organic recycled material include starch materials and cellulosic material, such as recycled fibers from old newsprint, refined paper, and/or wood fibers - also referred to as "dry broke." Non-limiting examples of inorganic recycled material include mineral wool, fiberglass, perlite, clay, and calcium carbonate.

The recycled material can be gathered from a number of sources - such as waste material from the production of other building products. The recycled material can be provided in a first-state, such as a wet pulp or a dry dust of the recycled material. The recycled material may also be provided as a bulk material (for example, sheets of newspaper) that is pre-processed (e.g., grinded) into the first-state before being pelletized into the second-state. The dust of the recycled material in the first-state may have an average particle size ranging from about 1 $\mu$m to about 10 $\mu$m - including all values and sub-ranges there-between.

According to some embodiments of the present invention, the when the recycled material comprises at least 80 wt. % of recycled newsprint, the pellets comprise at least may optionally comprise clay in an amount ranging from a non-zero wt. % up to about 20 wt. % - including all values and sub-ranges there-between - based on the total weight of the pellet in the dry-state. In a preferred embodiment, the when the pellets comprise at least 80 wt.% of recycled newsprint, the pellets may optionally comprise clay in an amount ranging from a 5 wt. % up to about 10 wt. % - including all values and sub-ranges there-between - based on the total weight of the pellet in the dry-state. The clay may be selected from wollastonite, ball clay, perlite, gypsym, calcite, aluminum trihydrate, and combinations thereof. In a preferred embodiment, the clay is ball clay.

The pellets of the second component may be formed by processing the recycled material in the first-state (e.g. as a dust) with, optionally, filler and/or binder, into a uniform web. The uniform web may then be further processed into the pellets of the second-state of recycled material. The term "uniform web" refers to a continuous bulk mass having the recycled material (and, optionally, filler and/or binder) uniformly distributed throughout. Transforming the recycled material from a dust into the uniform web and then into macro-sized pellets provides an effective methodology for manufacturing thick and highly acoustical building panels from recycled materials in the first-state that would be otherwise unsuitable for such applications.

According to some embodiments of the present invention, the uniform web may be formed by adding the recycled material in the first-state (and, optionally, minor amounts of binder and filler) to a mixer or a blender - such as a ribbon blender. Subsequently, water may be added to the recycled material in the first-state, followed by agitating at room temperature or a slight elevated temperature (e.g., 26 °C to about 38 °C), to form a recycled-slurry. The water may be present in an amount ranging from about 12 wt. % to about 70 wt. % based on the total weight of recycled-slurry - including all values and sub-ranges there-between. In a preferred embodiment, water is present in an amount ranging from about 15 wt. % to about 30 wt. % based on the total weight of the recycled-slurry - including all values and sub-ranges there-between.

The recycled-slurry is then conveyed to an extruder by twin-shaft feeder as a continuous or semi-continuous mass, whereby the recycled-slurry enters the extruder at an entry point. From the entry point, the recycled-slurry passes into a processing zone whereby it is processed into the uniform web. The processing zone may comprise a longitudinal single screw or longitudinal twin screws positioned within a longitudinal channel. The processing zone may be operated at a temperature ranging up to about 170 °F. In a preferred embodiment, the processing zone may be operated at a temperature ranging from about 100 °F to about 160 °F - including all temperatures and sub-ranges there-between.

As the recycled-slurry passes through the processing zone, the recycled material (and optionally binder and filler) is kneaded and uniformly distributed while the water is vaporized and driven from the recycled-slurry, thereby transforming the recycled-slurry into the uniform web. The uniform web leaves the processing zone and passes through an exit point of the extruder. At the point where the uniform web passes the exit point, the uniform web comprises less than about 5 wt. % of water based on the total weight of uniform web.

After passing the exit point, the uniform web may be shaped into pellets by a mechanical shaping device. The pellets may be shaped to have an average size ranging from about 500 $\mu$m to about 4,000 $\mu$m - including all values and sub-ranges there-between. In some embodiments, the pellets may be shaped to have an average size ranging from about 500 $\mu$m to about 2,000 $\mu$m - including all values and sub-ranges there-between. In some embodiments, the pellets may be shaped to have an average size ranging from about 500 $\mu$m to about 1,500 $\mu$m - including all values and sub-ranges there-between. The pellets may be shaped to have an average size that is substantially equal to the particle size of at least one of the fillers used in the first component. Non-limiting examples of mechanical shaping devices include grinders, rotary cutter granulators, and the like. The pellets may then pass through one or more screens to eliminate pellets having a particle size below a predetermined threshold.

The recycled material in the first-state may have a first particle size. The recycled material in the second-state may have a second particle size. The ratio of the second average particle size to the first average particle size may range from about 100:1 to about 100:1 - including all ratios and sub-ranges there-between.

The recycled-slurry and extrusion procession achieves a pellet having a substantially uniform relative density (also referred to as "specific gravity") that ranges from about 1.05 to about 1.8 as measured throughout the body of the pellet - including all densities and sub-ranges there-between. In some embodiments, the pellet has a substantially uniform relative density that ranges from about 1.1 to about 1.7 as measured throughout the body of the pellet - including all densities and sub-ranges there-between. In a preferred embodiment, the pellet has a substantially uniform relative density that ranges from about 1.3 to about 1.7 as measured throughout the body of the pellet - including all densities and sub-ranges there-between.

The terms "relative density" and "specific gravity" are art accepted terms that refers to a ratio of density of a substance (in this case, the pellet) and the density of a given reference material. According to the present invention, the relative density and specific gravity referred to herein is based on the density of water - i.e., 1 g/cm$^3$. Specifically:

$$\text{Relative Density (Specific Gravity)} = \rho \text{ substance} / \rho \text{ water}$$

Thus, for example, for pellets having a relative density of 1.3 corresponds to an actual density of 1.3 g/cm$^3$.

The pellets may be processed into a number of different shapes. Non-limiting examples of shapes include spherical, cylindrical, conical, or prism (i.e. polyhedron with an n-sided polygonal base).

According to the present invention, the building panel 100 of the present invention may comprise both the first component and the second component. Specifically, the second component may be present relative to the first component in a weight ratio ranging from about 1:99 to about 1:1.5 - including all ratios and sub-ranges there-between. In a preferred embodiment, the second component is present relative to the first component in 1:30 to about 1:1.5. The first component and the second component may sum to an amount that is about equal to the total weight of the body 120.

Stated otherwise, the second component may be present in an amount ranging from about 5 wt. % to about 40 wt. % and the first component may be present in an amount ranging from about 60 wt. % to about 95 wt. % - each based on the total weight of the body 120 and the first component and the second component sum to about 100% of the total dry-weight of the body 120.

In producing the building panel 100 of the present invention, the first component and the second component may be blended together to create a precursor blend. Specifically, the first and second components may be blended such that the first and second components are uniformly distributed throughout each other.

The precursor blend may then be processed into the body 120 by standard wet-laid processes that use an aqueous medium (e.g., liquid water). Specifically, water may be added to the precursor blend, which is initially in a dry-state, to form a building panel slurry.

The building panel slurry may then be transported a forming station, whereby the building panel slurry is distributed over a moving, porous wire web to form the building panel slurry into a uniform mat having the desired size and thickness. The water is removed, and the mat is then dried (i.e., the dry-state). The dried mat may be finished into the body 120 by slitting, punching, coating and/or laminating a surface finish to the tile.

The resulting body 120 has a substantially uniform bulk density that ranges from about 0.12 g/cm$^3$ to about 0.36 g/cm$^3$ - including all densities and sub-ranges there-between. The resulting body 120 also has a porosity that ranges from about 75 % to about 95 % - including all densities and sub-ranges there-between.

According to other embodiments of the present invention, the pellet may be formed according to a secondary methodology. Specifically, the pellets may be formed by adding the recycled material (and, optionally, minor amounts of binder and filler) to a mixer or a blender with water to form a secondary recycled-slurry. The water may be present in an amount ranging from about 70 wt. % to about 95 wt. % based on the total weight of secondary recycled-slurry - including all values and sub-ranges there-between. In a preferred embodiment, water is present in an amount ranging from about 10 wt. % to about 20 wt. % based on the total weight of the secondary recycled-slurry - including all values and sub-ranges there-between.

The secondary recycled-slurry further comprises a salt alginate - preferably sodium alginate. The salt alginate is present relative to the recycled material in a weight ratio of about 20:1 to about 10:1 - including all ratios and sub-ranges there-between. The mixture of water, recycled material, and salt alginate is then agitated for period of time sufficient for the recycled material (in its starting form) is completely wet-out. The term "wet-out" refers to the recycled material being uniformly distributed in the water as solution or suspension. Non-limiting examples of mixing time may range from 1 minute to about 30 minutes - including all times and sub-ranges there-between. Mixing time will be dependent on solids content of the secondary recycled-slurry, the ratio of salt alginate to recycled material, the mixing temperature, and agitation intensity.

Separately, a bath of calcium chloride in water is prepared. The calcium chloride is present in a concentration of about 3 wt. % based on 1 liter of water. The wet-out secondary recycled-slurry is then added to the bath of calcium chloride, with the secondary recycled-slurry agglomerating into pellets that have a particle size ranging from about 500 μm to about 4,000 μm - including all values and sub-ranges there-between. In a preferred embodiment, the pellets may have a particle size ranging from about 500 μm to about 2,000 μm - including all values and sub-ranges there-between. The pellets are then dried and can be used to form building panels according to the method previous discussed.

Referring generally now, the building panel 100 of the present invention is particularly suitable as an acoustic ceiling panel because the combination of the first component and the secondary component result in the body 120 having superior structural integrity without sacrificing the porosity needed to achieve the airflow properties through the building panel - while having up to about 40 wt. % of recycled material present in the building panel (i.e., the second component).

Specifically, the body 120 of the present invention may have a porosity ranging from about 60% to about 98% - including all values and sub-ranges there between. In a preferred embodiment, the body 120 has a porosity ranging from about 75% to 95% - including all values and sub-ranges there between. According to the present invention, porosity refers to the following:

$$\% \, \text{Porosity} = [V_{\text{Total}} - (V_{\text{Binder}} + V_{\text{Fiber}} + V_{\text{Filler}} + V_{\text{RM}})] \, / \, V_{\text{Total}}$$

Where $V_{\text{Total}}$ refers to the total volume of the body 120 defined by the upper surface 122, the lower surface 121, and the body side surfaces 123. $V_{\text{Binder}}$ refers to the total volume occupied by the binder in the body 120. $V_{\text{Fiber}}$ refers to the total volume occupied by the fibrous material 140 in the body 120. $V_{\text{Filler}}$ refers to the total volume occupied by the filler in the body 120. $V_{\text{RM}}$ refers to the total volume occupied by the recycled material in the body 120. Thus, the % porosity represents the amount of free volume within the body 120.

The body 120 may have an air flow resistance that is measured through the body 120 between the upper and lower surfaces 121, 122. Air flow resistance is a measured by the following formula:

$$R = (P_A - P_{\text{ATM}}) \, / \, \dot{V}$$

Where R is air flow resistance (measured in ohms); $P_A$ is the applied air pressure; $P_{\text{ATM}}$ is atmospheric air pressure; and V is volumetric airflow. The air flow resistance of the body 120 may range from about 0.5 ohm to about 50 ohms - including all resistances and sub-ranges there-between. In a preferred embodiment, the airflow resistance of the body 120 may range from about 0.5 ohms to about 35 ohms - including all resistances and sub-ranges there-between.

The body 120 of the present invention may exhibit sufficient airflow for the building panel 100 to have the ability to reduce the amount of reflected sound in a room. The reduction in amount of reflected sound in a room is expressed by a Noise Reduction Coefficient (NRC) rating as described in American Society for Testing and Materials (ASTM) test method C423. This rating is the average of sound absorption coefficients at four ⅓ octave bands (250, 500, 1000, and 2000 Hz), where, for example, a system having an NRC of 0.90 has about 90% of the absorbing ability of an ideal absorber. A higher NRC value indicates that the material provides better sound absorption and reduced sound reflection.

The body 120 may have an NRC of at least about 0.5. In a preferred embodiment, the body 120 may have an NRC ranging from about 0.60 to about 0.99 - including all value and sub-ranges there-between.

In addition to reducing the amount of reflected sound in a single room environment, the building panel 100 of the present invention should also be able to exhibit superior sound attention - which is a measure of the sound reduction between an active room environment 2 and a plenary space 2. The ASTM has developed test method E1414 to standardize the measurement of airborne sound attenuation between room environments 3 sharing a common plenary space 2. The rating derived from this measurement standard is known as the Ceiling Attenuation Class (CAC). Ceiling materials and systems having higher CAC values have a greater ability to reduce sound transmission through the plenary space 2 - i.e. sound attenuation function. The building panels 100 of the present invention may exhibit a CAC value of 30 or greater, preferably 35 or greater.

The building panel 100 of the present invention, one or more surface coatings may be applied to at least one of the upper or lower surface 122, 121 of the body 120 to form the building panel 100 of the present invention. Specifically, the one or more coatings may be applied individually, in a wet-state, by spray coating, roll coating, dip coating, and a combination thereof - followed by drying at a temperature ranging from about 200 °C to about 350 °C - including all values and sub-ranges there-between. The surface coating may be continuous or discontinuous. At least one of the surface coatings may comprise one of the aforementioned fillers.

The following examples are prepared in accordance with the present invention. The present invention is not limited to the examples described herein.

## EXAMPLES

The following experiments were prepared to test the acoustical performance of the acoustical building panels using the recycled pelletized material of the present invention. In preparing the acoustical panels, a recycled material in the form of a dust (herein referred to as "recycled broke" or "RB") was gathered from a factory floor. The formulation of the broke recycle is set forth below in Table 1:

**Table 1**

| Component | Wt. % |
|---|---|
| Mineral Wool | 16.0 |
| Fiberglass | 13.0 |
| Paper | 13.0 |
| Perlite | 50.0 |
| Starch | 8.0 |

The broke recycle was then processed into pellets according to the following methodology. A mixture comprising 90 wt. % of recycled broke was combined with 10 wt. % of ball clay. Water was then added to the mixture in a ratio ranging from about 1:1 to about 3:1 solids, whereby the wet mixture was agitated in a pelletizer. The solid components of the mixture began to agglomerate as it passed through the pelletizer, whereby wet pellets emerged at the output of the pelletizer. The wet pellets were then dried to form dry pellets (herein referred to as "recycled pellets" or "RP"). The recycled pellets exhibited the following average characteristics as set forth in Table 2.

**Table 2**

| Dry Bulk Density | 0.5 g/cm$^3$ |
|---|---|
| Water Relative Density | 1.75 |
| Skeletal Density | 1.8 g/cm$^3$ |

A first set of acoustical panels (referred to as Examples 1-4 or "Ex." 1-4) were formed from a wet-laid process using a wet mixture of the recycled pellets, mineral wool, paper, perlite, and starch binder. A second set of acoustical panels (referred to as Comparative Examples 1-4 or "Comp. Ex." 1-4) were formed from a wet-laid process using a mixture of the recycled broke (i.e., the same recycled dust material that was used to form the recycled pellets), mineral wool, paper, perlite, and starch binder.

A first batch of two acoustic panels (Ex. 1 and Comp. Ex. 1) was formed as hand-sheets using a 14" x 26" mold as a bench experiment. A second batch of two acoustic panels (Ex. 2 and Comp. Ex. 2) was formed as hand-sheets using a 14" x 26" mold as a bench experiment. A third batch of two acoustical panels (Ex. 3 and Comp. Ex. 3) as well as a fourth batch of two acoustical panels (Ex. 4 and Comp. Ex. 4) were each formed using large-scale production equipment to simulate full-scale production of the acoustic panels. The acoustical panels of Ex. 1-4 exhibit no significant reduction in mechanical strength compared to the acoustical panel of Comp. Ex. 1-4.

Each of the first, second, third, and fourth batches were produced from the same source of recycled material. While the composition of the recycled material was fairly consistent within a single batch, slight variation in composition existed between batches due to the nature of using recycled material. As discussed further herein, the slight variations in recycled material composition accounts for slight variation in acoustical performance from otherwise seemingly identical panels (for example, the acoustical performance of Ex. 1 vs. that of Ex. 2). Furthermore, the characteristics in Table 2 are the average values for all four batches of Examples 1-4.

After production of each acoustic panel, the airflow resistance of each panel was measured. The airflow resistance of these examples was measured in ohms, as discussed previously. The performance of each acoustical panel of Ex. 1-4 and Comp. Ex. 1-4 are set forth below in Table 3.

**Table 3**

| Component (wt. %) | Ex. 1 | Comp. Ex. 1 | Ex. 2 | Comp. Ex. 2 | Ex. 3 | Comp. Ex. 3 | Ex. 4 | Comp. Ex. 4 |
|---|---|---|---|---|---|---|---|---|
| Mineral Wool | 55.5 | 55.5 | 55.5 | 55.5 | 55.5 | 55.5 | 43.7 | 55.1 |
| Paper | 2.3 | 2.3 | 2.3 | 2.3 | 2.3 | 2.3 | 2.6 | 2.7 |
| Perlite | 12.2 | 12.2 | 12.2 | 12.2 | 12.2 | 12.2 | 10.6 | 11.6 |
| Starch | 6.0 | 6.0 | 6.0 | 6.0 | 6.0 | 6.0 | 6.1 | 6.0 |

(continued)

| Component (wt. %) | Ex. 1 | Comp. Ex. 1 | Ex. 2 | Comp. Ex. 2 | Ex. 3 | Comp. Ex. 3 | Ex. 4 | Comp. Ex. 4 |
|---|---|---|---|---|---|---|---|---|
| Clay | - | - | - | - | - | - | - | - |
| Recycled Broke | - | 24.0 | - | 24.0 | - | 24.0 | - | 24.5 |
| Recycled Pellets | 24.0 | - | 24.0 | - | 24.0 | - | 37.0 | - |
| | | | | | | | | |
| Total | 100 | 100 | 100 | 100 | 100 | 100 | 100 | 100 |
| | | | | | | | | |
| Porosity | 90.8% | 91.3% | 86.9% | 87.4% | 90.8% | 91.3% | 88.5% | 88.4% |
| Ohms | 2.9 | 3.1 | 4.0 | 5.3 | 2.9 | 3.1 | 5.5 | 5.7 |
| Structure Factor | 12,100 | 16,200 | 5,300 | 7,400 | 12,100 | 16,150 | 10,600 | 10,500 |

As demonstrated by Table 3, replacing the recycled broke dust with the recycled pellets provides an unexpected decrease in airflow resistance of the acoustical panel.

Furthermore, to account for slight variations in porosity that exists between panels, the structure factor ("K") for each acoustical panel was also calculated. The structure factor K represents corrected airflow resistance measurement that accounts for slight variations in porosity between each specific panel. The structure factor may be calculated using the relationship: $\Omega = K (1-\Phi)^{3.5}$, whereby $\Omega$ = Resistance (Ohms); $(1-\Phi)$ = Porosity ($\Phi$ is the solid fraction); and K = structure factor. Similar to airflow resistance, a decrease in the structure factor indicates a corresponding increase in acoustical absorption of an acoustical panel. It is very difficult to precisely control porosity between two or more separate panels. Therefore, the correction provided by the structure factor K is especially useful in providing an accurate side-by-side comparison of acoustical absorption of two or more panels that are formed from the same types and amounts of material (e.g., mineral wool, paper, perlite, and starch), yet still exhibit differing porosity (e.g., the acoustic panels of Ex. 1 vs. Comp. Ex. 1).

With the above in mind, Table 3 demonstrates a marked improvement in acoustical performance between the ceiling panels of the present invention that use the recycled pellets in place of the recycled broke dust. The improvement in acoustical absorption is further summarized below in Table 4.

**Table 4**

| | Ex. 1 | Comp. Ex. 1 | Ex. 2 | Comp. Ex. 2 | Ex. 3 | Comp. Ex. 3 | Ex. 4 | Comp. Ex. 4 |
|---|---|---|---|---|---|---|---|---|
| Structure Factor (K) | 12,100 | 16,200 | 5,300 | 7,400 | 12,100 | 16,150 | 10,600 | 10,500 |
| Replacement Ratio of RP:RB | 1:1 | | 1:1 | | 1:1 | | 1.5:1 | |
| % Reduction K Using RP in Place of RB | 25.3% | | 28.4% | | 25.1% | | -1.0% | |

As shown in Table 4, each acoustic panel of Ex. 1-3 exhibited at least a 25% reduction in structure factor K when replacing equal amounts of recycled broke (RB) for recycled pellets (RP) - i.e., a replacement ratio of 1:1. Additionally, while the acoustical panel of Ex. 4 exhibited a very slight increase in structure factor K compared to that of Comp. Ex. 4, the increase came when using a much greater amount of recycled pellets (RP) as compared to the amount of recycled broke (RB) used in Comp. Ex. 4 - i.e., a replacement ratio of 1.5:1. Thus, depending on the amount in the acoustical panel, the recycled pellets of the present invention can be used to enhance the sound absorption and/or reduce material cost of the acoustical panels while still achieving adequate sound absorption performance, because the recycled pellets allow for greater amounts of recycled material to be incorporated into the acoustical panels while still achieving essentially the same sound absorption characteristics as an acoustical formed from recycled broke dust material.

**Claims**

1.    A method of producing an acoustical building panel (100) comprising:

forming a mixture comprising recycled material in a first-state and water;

feeding the mixture to an extruder at an entry point, whereby the mixture is processed into uniform web that exits the extruder at an exit point;

forming pellets from the uniform web after the exit point, the pellets being in a second-state; and

forming an acoustical building panel (100) from the pellets;

**characterized in that** the recycled material in the first-state is a cellulosic dust having a first average particle size and the pellets in the second-state have a second average particle size, the ratio of the second average particle size to the first average particle size is at least about 20:1.

2. The method according to claim 1, wherein the water in step a) is present in an amount ranging from about 5 wt. % to about 25 wt. % based on the total weight of the mixture.

3. The method according to anyone of claims 1 to 2, wherein the recycled material is present in an amount ranging from about 75 wt. % to about 95 wt. % based on the total weight of the mixture.

4. The method according to anyone of claims 1 to 3, wherein the second average particle size ranges from about 500 $\mu$m to about 1,500 $\mu$m.

5. The method according to anyone of claims 1 to 4, wherein the extruder is operated at a temperature ranging from about 48.89°C (120 °F) to about 76.67°C (170 °F), wherein optionally the uniform web at the exit point has a content of water less than about 5 wt. % based on the total weight of the uniform web.

6. The method according to anyone of claims 1 to 5, wherein the pellets are formed in step c) by mechanical cutting, wherein optionally step d) further comprises mixing the pellets with a fibrous material and a binder.

7. The method according to anyone of claims 1 to 6, wherein pellets are present in an amount ranging from a non-zero value up to about 40 wt. % based on the total weight of the building panel (100).

8. An acoustical building panel (100) comprising a body (120) formed from:

a first component comprising:

a fibrous material (140);
a binder;

and

a second component comprising pellets of a recycled material that includes a cellulosic material; wherein the second component is present in an amount ranging from about 5 wt. % to about 40 wt. % based on the total weight of the body (120),

**characterized in that** the recycled material in the first-state is a cellulosic dust, wherein the pellets are formed from the recycled material in said first-state having a first average particle size, the pellets have a second average particle size, and the ratio of the second average particle size to the first average particle size is at least about 20:1.

9. The acoustical building panel (100) according to claim 8, wherein first component and the second component sum to about 100% of the total weight of the body (120).

10. The acoustical building panel (100) according to any one of claims 8 to 9, wherein the pellet has a specific gravity ranging from about 1.05 to about 1.8, the specific gravity based on the density of water.

11. The acoustical building panel (100) according to claim 8 to 10, wherein the fibrous material (140) has an average length ranging from about 0.5 mm to about 2.0 mm.

12. The acoustical building panel (100) according to any one of claims 8 to 11, wherein the fibrous material (140) is selected from the group consisting of inorganic fiber, organic fiber, and combinations thereof, wherein optionally the inorganic fiber comprises at least one of mineral wool, rock wool, stone wool, and glass fibers, and wherein optionally the organic fiber comprises at least one of fiberglass, cellulosic fibers, polymer fibers, and protein fibers.

**13.** The acoustical building panel (100) according to any one of claims 8 to 12, wherein the binder comprises at least one of a starch-based polymer, polyvinyl alcohol (PVOH), a latex, polysaccharide polymers, cellulosic polymers, protein solution polymers, an acrylic polymer, polymaleic anhydride, and epoxy resins.

**14.** The acoustical building panel (100) according to any one of claims 8 to 13, wherein the first component further comprises a filler,

wherein optionally the fibrous material (140) is present in an amount ranging from about 50 wt. % to about 75 wt. % based on the total weight of the first component;
wherein optionally the binder is present in an amount ranging from about 5 wt. % to about 15 wt. % based on the total weight of the first component;
wherein optionally the second component comprises calcium chloride;
wherein optionally the pellets have a relative density to water ranging from about 1.05 to about 1.9.

**15.** The acoustical building panel (100) according to any one of claims 8 to 14, wherein the second component comprises sodium alginate, wherein optionally the sodium alginate and the recycled material are present in a weight ratio ranging from about 1:10 to about 1:20.

**Patentansprüche**

**1.** Verfahren zum Herstellen eines akustischen Bauelements (100), umfassend:

Ausbilden einer Mischung, umfassend recyceltes Material in einem ersten Zustand und Wasser;
Zuführen der Mischung zu einem Extruder an einem Eintrittspunkt, wodurch die Mischung zu einer gleichmäßigen Bahn verarbeitet wird, die den Extruder an einem Austrittspunkt verlässt;
Ausbilden von Pellets aus der gleichmäßigen Bahn nach dem Austrittspunkt, wobei die Pellets sich in einem zweiten Zustand befinden; und
Ausbilden eines akustischen Bauelements (100) aus den Pellets;
**dadurch gekennzeichnet, dass** das recycelte Material in dem ersten Zustand ein Zellulosestaub ist, der eine erste durchschnittliche Partikelgröße aufweist, und die Pellets in dem zweiten Zustand eine zweite durchschnittliche Partikelgröße aufweisen, wobei das Verhältnis der zweiten durchschnittlichen Partikelgröße zu der ersten durchschnittlichen Partikelgröße mindestens etwa 20 : 1 beträgt.

**2.** Verfahren nach Anspruch 1, wobei das Wasser in Schritt a) in einer Menge im Bereich von etwa 5 Gew.-% bis etwa 25 Gew.-%, bezogen auf das Gesamtgewicht der Mischung, vorhanden ist.

**3.** Verfahren nach einem der Ansprüche 1 bis 2, wobei das recycelte Material in einer Menge im Bereich von etwa 75 Gew.-% bis etwa 95 Gew.-%, bezogen auf das Gesamtgewicht der Mischung, vorhanden ist.

**4.** Verfahren nach einem der Ansprüche 1 bis 3, wobei die zweite durchschnittliche Partikelgröße im Bereich von etwa 500 μm bis etwa 1.500 μm liegt.

**5.** Verfahren nach einem der Ansprüche 1 bis 4, wobei der Extruder bei einer Temperatur im Bereich von etwa 48,89 °C (120 °F) bis etwa 76,67 °C (170 °F) betrieben wird,
wobei optional die gleichmäßige Bahn an dem Austrittspunkt einen Wassergehalt von weniger als etwa 5 Gew.-%, bezogen auf das Gesamtgewicht der gleichmäßigen Bahn, aufweist.

**6.** Verfahren nach einem der Ansprüche 1 bis 5, wobei die Pellets in Schritt c) durch mechanisches Schneiden ausgebildet werden, wobei optional Schritt d) ferner ein Mischen der Pellets mit einem Fasermaterial und einem Bindemittel umfasst.

**7.** Verfahren nach einem der Ansprüche 1 bis 6, wobei Pellets in einer Menge im Bereich von einem Wert ungleich Null bis zu etwa 40 Gew.-%, bezogen auf das Gesamtgewicht des Bauelements (100), vorhanden sind.

**8.** Akustisches Bauelement (100), umfassend einen Körper (120), der ausgebildet ist aus:
einer ersten Komponente, umfassend:

ein Fasermaterial (140);

ein Bindemittel;

und eine zweite Komponente, umfassend Pellets aus einem recycelten Material, das ein Zellulosematerial einschließt; wobei die zweite Komponente in einer Menge im Bereich von etwa 5 Gew.-% bis etwa 40 Gew.-%, bezogen auf das Gesamtgewicht des Körpers (120), vorhanden ist, **dadurch gekennzeichnet, dass** das recycelte Material in dem ersten Zustand ein Zellulosestaub ist, wobei die Pellets aus dem recycelten Material in dem ersten Zustand ausgebildet sind, das eine erste durchschnittlichen Partikelgröße aufweist, die Pellets eine zweite durchschnittliche Partikelgröße aufweisen und das Verhältnis der zweiten durchschnittlichen Partikelgröße zu der ersten durchschnittlichen Partikelgröße mindestens etwa 20 : 1 beträgt.

9. Akustisches Bauelement (100) nach Anspruch 8, wobei die erste Komponente und die zweite Komponente auf etwa 100 % des Gesamtgewichts des Körpers (120) summieren.

10. Akustisches Bauelement (100) nach einem der Ansprüche 8 bis 9, wobei das Pellet eine relative Dichte im Bereich von etwa 1,05 bis etwa 1,8 aufweist, wobei die relative Dichte auf der Dichte von Wasser basiert.

11. Akustisches Bauelement (100) nach Anspruch 8 bis 10, wobei das Fasermaterial (140) eine durchschnittliche Länge im Bereich von etwa 0,5 mm bis etwa 2,0 mm aufweist.

12. Akustisches Bauelement (100) nach einem der Ansprüche 8 bis 11, wobei das Fasermaterial (140) aus der Gruppe ausgewählt ist, bestehend aus einer anorganischen Faser, einer organischen Faser und Kombinationen davon, wobei optional die anorganische Faser mindestens eines von Mineralwolle, Gesteinswolle, Steinwolle und Glasfasern umfasst, und wobei optional die organische Faser optional mindestens eines von einer Glasfaser, Zellulosefasern, Polymerfasern und Proteinfasern umfasst.

13. Akustisches Bauelement (100) nach einem der Ansprüche 8 bis 12, wobei das Bindemittel mindestens eines von einem stärkebasierten Polymer, Polyvinylalkohol (PVOH), einem Latex, Polysaccharidpolymeren, Zellulosepolymeren, Proteinlösungspolymeren, einem Acrylpolymer, Polymaleinsäureanhydrid und Epoxidharzen umfasst.

14. Akustisches Bauelement (100) nach einem der Ansprüche 8 bis 13, wobei die erste Komponente ferner einen Füllstoff umfasst,

wobei optional das Fasermaterial (140) in einer Menge im Bereich von etwa 50 Gew.-% bis etwa 75 Gew.-%, bezogen auf das Gesamtgewicht der ersten Komponente, vorhanden ist;

wobei optional das Bindemittel in einer Menge im Bereich von etwa 5 Gew.-% bis etwa 15 Gew.-%, bezogen auf das Gesamtgewicht der ersten Komponente, vorhanden ist;

wobei optional die zweite Komponente Kalziumchlorid umfasst;

wobei optional die Pellets eine spezifische Dichte gegenüber Wasser im Bereich von etwa 1,05 bis etwa 1,9 aufweisen.

15. Akustisches Bauelement (100) nach einem der Ansprüche 8 bis 14, wobei die zweite Komponente Natriumalginat umfasst, wobei optional das Natriumalginat und das recycelte Material in einem Gewichtsverhältnis im Bereich von etwa 1 : 10 bis etwa 1 : 20 vorhanden sind.

**Revendications**

1. Procédé de production d'un panneau de construction acoustique (100) comprenant :

la formation d'un mélange comprenant un matériau recyclé dans un premier état et de l'eau ;

la fourniture du mélange à une extrudeuse au niveau d'un point d'entrée, moyennant quoi le mélange est transformé en une bande uniforme qui sort de l'extrudeuse au niveau d'un point de sortie ;

la formation de granulés à partir de la bande uniforme après le point de sortie, les granulés étant dans un second état ; et

la formation d'un panneau de construction acoustique (100) à partir des granulés ;

**caractérisé en ce que** le matériau recyclé dans le premier état est une poussière cellulosique ayant une première taille moyenne de particules et les granulés dans le second état ont une seconde taille moyenne de particules, le rapport entre la seconde taille moyenne de particules et la première taille moyenne de particules est d'au moins environ 20:1.

2. Procédé selon la revendication 1, dans lequel l'eau de l'étape a) est présente en une quantité allant d'environ 5 % en poids à environ 25 % en poids sur la base du poids total du mélange.

3. Procédé selon l'une quelconque des revendications 1 à 2, dans lequel le matériau recyclé est présent en une quantité allant d'environ 75 % en poids à environ 95 % en poids sur la base du poids total du mélange.

4. Procédé selon l'une quelconque des revendications 1 à 3, dans lequel la seconde taille moyenne de particules va d'environ 500 $\mu$m à environ 1 500 $\mu$m.

5. Procédé selon l'une quelconque des revendications 1 à 4, dans lequel l'extrudeuse fonctionne à une température allant d'environ 48,89 °C (120 °F) à environ 76,67 °C (170 °F),
dans lequel, éventuellement, la bande uniforme au niveau du point de sortie a une teneur en eau inférieure à environ 5 % en poids sur la base du poids total de la bande uniforme.

6. Procédé selon l'une quelconque des revendications 1 à 5, dans lequel les granulés sont formés à l'étape c) par découpage mécanique, dans lequel éventuellement l'étape d) comprend en outre le mélange des granulés avec un matériau fibreux et un liant.

7. Procédé selon l'une quelconque des revendications 1 à 6, dans lequel les granulés sont présents en une quantité allant d'une valeur non nulle jusqu'à environ 40 % en poids sur la base du poids total du panneau de construction (100).

8. Panneau de construction acoustique (100) comprenant un corps (120) formé :
d'un premier composant comprenant :

   un matériau fibreux (140) ;
   un liant ;
   et d'un second composant comprenant des granulés d'un matériau recyclé qui comporte un matériau cellulosique ; dans lequel le second composant est présent en une quantité allant d'environ 5 % en poids à environ 40 % en poids sur la base du poids total du corps (120),
   **caractérisé en ce que** le matériau recyclé dans le premier état est une poussière cellulosique, dans lequel les granulés sont formés à partir du matériau recyclé dans ledit premier état ayant une première taille moyenne de particules, les granulés ont une seconde taille moyenne de particules, et le rapport de la seconde taille moyenne de particules à la première taille moyenne de particules est d'au moins environ 20:1.

9. Panneau de construction acoustique (100) selon la revendication 8, dans lequel le premier composant et le second composant représentent environ 100 % du poids total du corps (120).

10. Panneau de construction acoustique (100) selon l'une quelconque des revendications 8 à 9, dans lequel le granulé a une densité spécifique allant d'environ 1,05 à environ 1,8, la densité spécifique étant basée sur la densité de l'eau.

11. Panneau de construction acoustique (100) selon les revendications 8 à 10, dans lequel le matériau fibreux (140) a une longueur moyenne allant d'environ 0,5 mm à environ 2,0 mm.

12. Panneau de construction acoustique (100) selon l'une quelconque des revendications 8 à 11, dans lequel le matériau fibreux (140) est choisi dans le groupe constitué de fibre inorganique, de fibre organique et leurs combinaisons, dans lequel éventuellement la fibre inorganique comprend au moins l'une parmi laine minérale, laine de roche, laine de pierre et fibres de verre, et dans lequel éventuellement la fibre organique comprend au moins l'une parmi fibres de verre, fibres cellulosiques, fibres polymères et fibres protéiques.

13. Panneau de construction acoustique (100) selon l'une quelconque des revendications 8 à 12, dans lequel le liant comprend au moins l'un parmi un polymère à base d'amidon, de l'alcool polyvinylique (PVOH), un latex, des polymères de polysaccharides, des polymères cellulosiques, des polymères de solutions protéiques, un polymère acrylique, de l'anhydride polymaléique et des résines époxy.

**14.** Panneau de construction acoustique (100) selon l'une quelconque des revendications 8 à 13, dans lequel le premier composant comprend en outre une charge,

> dans lequel éventuellement le matériau fibreux (140) est présent en une quantité allant d'environ 50 % en poids à environ 75 % en poids sur la base du poids total du premier composant ;
> dans lequel éventuellement le liant est présent en une quantité allant d'environ 5 % en poids à environ 15 % en poids sur la base du poids total du premier composant ;
> dans lequel éventuellement le second composant comprend du chlorure de calcium ;
> dans lequel éventuellement les granulés ont une densité relative à l'eau allant d'environ 1,05 à environ 1,9.

**15.** Panneau de construction acoustique (100) selon l'une quelconque des revendications 8 à 14, dans lequel le second composant comprend de l'alginate de sodium, dans lequel éventuellement l'alginate de sodium et le matériau recyclé sont présents dans un rapport de poids allant d'environ 1:10 à environ 1:20.

FIG. 1

FIG. 2

EP 3 455 428 B1

**FIG. 3**

EP 3 455 428 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PL 206525 B1